# EUROPÄISCHE PATENTSCHRIFT

(11) **EP 0 670 387 B1**
(45) Veröffentlichungstag und Bekanntmachung des Hinweises auf die Patenterteilung: **21.07.1999**
(21) Anmeldenummer: 94119268.4
(22) Anmeldetag: 07.12.1994
(51) Int. Cl.: E01C 7/26, C08L 95/00

(54) **Strassenbelag mit Kunststoffbeimischungen**
Road covering with plastic admixtures
Revêtements routier avec matière plastique comme mélanges additionnels

(30) Priorität: 04.03.1994 DE 9403628 U
(43) Veröffentlichungstag der Anmeldung: 06.09.1995
(73) Patentinhaber: Bredemeyer, Jörg, 01159 Dresden (DE)
(72) Erfinder: Bredemeyer, Jörg, 01159 Dresden (DE)
(74) Vertreter: Heyner, Klaus, Dr.-Ing.

(56) Entgegenhaltungen:
- EP-A- 0 332 245
- CH-A- 548 960
- US-A- 3 849 355

## Beschreibung

Die Erfindung bezieht sich auf die Verwertung von Kunststoffabfällen bei der Herstellung von Straßenbelag; solche Kunststoffabfälle werden in Deutschland insbesondere mit dem Dualen System bereitgestellt.

Aus DE-A-36 31 075 ist ein Material für Antidröhnbeläge bekannt, welches Bitumen oder ein Gemisch aus Bitumen und Kunststoff sowie poröse Füllstoffe enthält. Als Füllstoffe werden mit einer einer Beschichtung versehene, überwiegend aus Hohlkörpergebilden bestehende Tonstoffe verwendet.

Des weiteren wurde in DE-A-38 08 250 ein Straßenbelag vorgeschlagen, der aus einem Asphaltmischgut mit einem abgestuften Mineralstoffgerüst und einer Mörtelphase besteht, die einen Füller, ein Bindemittel aus der Gruppe Normenbitumen sowie eine eishemmenden Komponente aufweist. Die eishemmende Komponente ist dabei aus einer Mischung von mindestens einem thermoplastischen Kunststoff aus der Gruppe der Olefin-Polymerisate und Olefin-Copolymerisate mit einer definierten Schmelzviskosität und weiteren Zusätzen zusammengesetzt.

In DE-U-93 11 631.4 wird ein Reststoffbitumenbelag für Straßenbau und Industrieböden beschrieben, der schwer zu entsorgende Abfallstoffe, wie z.B. Verpackungsmaterialien und zahlreiche weitere Reststoffe aus dem Dualen System durch Beimischung in den Bitumenbelag einer Wiederverwertung zuführt.

Kennzeichnendes Merkmal der hier vorgestellten Lösung für einen Reststoffbitumenbelag ist es, daß einer Vielzahl zerkleinerter, zerfaserter, zermahlener, schwer zu entsorgender Reststoffe Bitumen als Bindemittel beigemischt wird. Dabei übernimmt das Bitumen die Funktion einer hermetischen Umhüllung der Reststoffpartikel und wirkt gleichzeitig als Bindemittel für die Partikel und die weiteren Beimischungskomponenten untereinander.

Des weiteren wird in CH-A-545 832 ein Verfahren zur Herstellung einer Polyäthylen und/oder Polypropylen enthaltenden Mischung auf Bitumen- oder Asphaltbasis für Bauzwecke bekannt gemacht.
Bei diesem Verfahren werden ausgewählte bzw. sortierte Kunststoffe (Polyäthylen, Polypropylen) als Regenerat in Form rieselfähiger kleiner, von der Pulverform abweichender Teilchen dem Bitumen oder Asphalt zugesetzt.
Die Größenabmessungen des Hauptanteils der beigemischten Polyäthylen bzw. -propylenregenerate liegt im Bereich von 2 - 10 mm.
Die Mischung des Polyäthylens und/oder Polypropylens mit dem Bitumen oder Asphalt erfolgt bei einer Temperatur von 250 bis 280°C, wobei eine Vorwärmung der Zuschlagstoffe oder die Herstellung einer konzentrierten Vormischung des Regenerats mit dem Bitumen oder Asphalt erfolgen soll.

Nachteilig bei diesem Verfahren ist u.a., daß neben dem Einsatz ausgewählter Kunststoffe die hohen Verarbeitungstemperaturen von über 200 °C zu einer Alterung und damit Qualitätsminderung des Bitumens führen.

Die US-A-3,849,355 beschreibt eine ähnliches Verfahren, wobei die Mischung für den Straßenbelag in mehreren Verfahrensschritten hergestellt wird.

Aufgabe der Erfindung ist es, einen wirtschaftlich sinnvollen Einsatzbereich für die Verwertung der als Müll bzw. Abfall anfallenden Kunststoffe aller Art zu erschließen. Dabei soll neben der wirtschaftlich-ökologischen Komponente der Wiederverwertung und gleichzeitigen umweltverträglichen Abfallbeseitigung eine Erhöhung von Qualität und Gebrauchswert des Straßenbelages erreicht werden.

Diese Aufgabe wird erfindungemäß durch die Merkmale des Anspruchs 1 gelöst, die Unteransprüche zeigen weitere vorteilhafte Ausgestaltungen der Erfindung.

Das Wesen der Erfindung besteht darin, daß geschredderte Kunststoffabfälle, wie sie beispielsweise in Deutschland mit dem Dualen System anfallen, direkt dem Produktionsprozeß einer Bitumenmischanlage zugesetzt werden.
Die Größenabmessungen der für den Mischvorgang bereitgestellten geschredderten Kunststoffe liegen im Bereich von etwa 10 mm bis 60 mm.

Die Kunststoffabfälle in geschredderter Form sind dabei eine Komponente im Beschickungsprogramm der Bitumenmischanlage. Die Mischung der geschredderten Kunststoffe mit Bitumen und Zuschlagstoffen erfolgt bei üblicher Erhitzung im Rahmen des Mischvorganges bei Temperaturen von 170 ... 180°C.

Die geschredderten Kunststoffe können in beliebiger, unsortierter Mischung dem Produktionsprozeß der Bitumenmischanlage zugeführt werden.
Der empfohlene Gewichtsanteil der geschredderten Kunststoffe im hergestellten neuen Straßenbelag liegt im Bereich von etwa 10 ... 30 %.

Die Verarbeitung aller für die Herstellung des Straßenbelages eingesetzten Komponenten, also die zur Herstellung der Bitumenmischung eingesetzten Ausgangsprodukte, wie Bitumen, Kies und Bindemittel und der geschredderte Kunststoffanteil, erfolgt in einem Verfahrensschritt, wodurch die Homogenisierung der Mischung verfahrensimmanent ist.

Kennzeichnendes Merkmal des neuen Straßenbelages ist es, daß durch das Aufschmelzen der Kunststoffpartikel während des Verarbeitungsprozesses bzw. Mischvorganges eine feste Verbindung mit den weiteren Mischungskomponenten erzielt wird. Das führt zu einer höheren Festigkeit und mechanischen Belastbarkeit des Straßenbelages, die Abriebfestigkeit wird bei Gewährleistung einer hohen Elastizität erhöht.

Die erforderlichen bzw. gewünschten Einsatzparameter des herzustellenden Straßenbelages, wie insbesondere mechanische Belastbarkeit, Abriebfestigkeit und Antidröhnverhalten können mit dem jeweiligen Kunststoffanteil eingestellt werden.

Bei Stabilitätsuntersuchungen mit Probemengen bzw. an Probekörpern konnten bei einem Gewichtsanteil von ca. 10 % zugemischter Kunststoffe Festigkeiten von ≥ 30 kN erreicht werden.
Übliche, bisher für die Herstellung von Straßenbelägen eingesetzte Bitumenmischungen weisen dagegen Festigkeiten von ca. 15 kN für die Tragschicht und ca. 8 kN für die Deckschicht auf.

Ausgehend von dem Tatbestand, daß die Zumischung von geschredderten Kunststoffen zu einer höheren Festigkeit des Bitumens führt, kann die Beimischung eines definierten Kunststoffanteils im direkten Austausch mit der Mischungskomponente Bitumen erfolgen, was eine unmittelbare Einsparung von Bitumen zur Folge hat.
Das bedeutet u.a., daß die Bindemittelfunktion des Bitumens durch den im Austausch zugemischten Kunststoff übernommen wird.

Gegebenenfalls kann ausgehend von der durch die Zuführung geschredderter Kunststoffe erlangten höheren Festigkeit der Bitumenmischung ein höherer Anteil Bitumen eingespart werden als geschredderte Kunststoffe zugemischt werden.

Die Herstellung des neuen Straßenbelages kann mit herkömmlichen Maschinen erfolgen. Im Ergebnis des Produktionsprozesses entsteht ein homogenes Gemenge mit analog ausgeprägten guten Stützkörpereigenschaften, was insgesamt zu den bereits beschriebenen hervorragenden Qualitätseigenschaften des neuen Straßenbelages, wie mechanische Belastbarkeit, Abriebfestigkeit, Elastizität und Antidröhnfunktion führt.

Nach einem Ausführungsbeispiel der Erfindung besteht der neue Straßenbelag aus den folgenden Mischungskomponenten und Mischungsanteilen (Gewichtsanteile):
- geschredderter Kunststoff in Form unsortierter Kunststoffabfälle aus den Dualen System Deutschland = 20 %
- Bitumen = 65 %
- Kies = 10 %
- Bindemittel = 5 %

## Patentansprüche

1. Verfahren zur Herstellung eines Straßenbelages mit Kunststoffbeimischungen.,
**dadurch gekennzeichnet,** daß geschredderte Kunststoffe in den Größenabmessungen von 10 mm bis 60 mm, die als Mischung beliebiger unsortierter Kunststoffabfälle anfallen, mit einem Gewichtsanteil im hergestellten Straßenbelag von 10 bis 30% zusammen mit Bitumen und weiteren Zuschlagstoffen in einem einzigen Verfahrensschritt der Mischanlage bei Temperaturen von 170 bis 180°C verarbeitet werden, wobei die beigemischten Kunststoffabfälle aufgeschmolzen werden und während des Verarbeitungsprozesses eine Verbindung mit den weiteren Mischungskomponenten eingehen.

2. Verfahren nach Anspruch 1,
**dadurch gekennzeichnet,** daß als weitere Zuschlagstoffe Kies und Bindemittel zugegeben werden.

## Claims

1. Process for the production of a road covering with plastic admixtures
**characterized in** that shredded plastics of sizes 10 mm to 60 mm that come up as mixture of any unsorted plastic waste materials with a proportion by weight in the produced road covering of 10 to 30 % are processed together with bitumen and other aggregates in one single processing step of the mixing plant at temperatures of 170 to 180 °C whereby the admixed plastic waste materials are melted and form a bond to the other mixing components.

2. Process to Claim 1
**characterized in** that as other aggregates, gravel and binders are admixed.

## Revendications

1. Procédé de fabrication d'un revêtement routier avec mélanges additionnels de plastiques, **caractérisé en ce que** les matières plastiques découpées, d'une taille comprise entre 10 mm et 60 mm, qui se présentent sous la forme de mélange de déchets plastiques quelconques non triés, sont traitées, selon une proportion en masse dans le revêtement routier fabriqué comprise entre 10 et 30 %, avec du bitume et d'autres additifs au cours d'une étape de procédé unique dans l'installation à mélanger, à des températures comprises entre 170 et 180 °C, les déchets plastiques ajoutés en mélange additionnel étant fondus et subissant une liaison avec les autres constituants du mélange au cours du procédé de traitement.

2. Procédé selon la revendication 1, **caractérisé en ce que** l'on ajoute en tant qu'autres additifs du gravier et un liant.
